# EUROPEAN PATENT SPECIFICATION

(11) **EP 2 684 098 B1**
(45) Date of publication and mention of the grant of the patent: **13.01.2021**
(21) Application number: 12717850.7
(22) Date of filing: 12.03.2012
(51) Int. Cl.: G05B 19/418

(54) **TRANSFER SYSTEM FOR SETTING A PIECE IN A REQUIRED ORIENTATION**
ÜBERTRAGUNGSSYSTEM ZUR EINSTELLUNG EINES TEILS IN EINER ERFORDERLICHEN AUSRICHTUNG
SYSTÈME DE TRANSFERT PERMETTANT DE DISPOSER UNE PIÈCE SELON UNE ORIENTATION EXIGÉE

(30) Priority: 10.03.2011 IT TO20110214
(43) Date of publication of application: 15.01.2014
(60) Divisional application: 20203619.0
(73) Proprietor: Ferrero Trading Lux S.A., 2632 Findel (LU)
(72) Inventor: FEMIA, Corrado, I-10096 Grugliasco (IT); NIGRA, Claudio, I-10090 Gassino (IT)
(74) Representative: Lovino, Paolo
(86) International application number: PCT/IB2012/051161
(87) International publication number: WO 2012/120486

(56) References cited:
- EP-A2- 1 043 642
- GB-A- 1 534 167
- US-A1- 2006 083 419
- TERASAKI H ET AL: "Motion planning for intelligent manipulations by sliding and rotating operations with parallel two-fingered grippers", INTELLIGENT ROBOTS AND SYSTEMS '94. 'ADVANCED ROBOTIC SYSTEMS AND THE REAL WORLD', IROS '94. PROCEEDINGS OF THE IEEE/RSJ/GI INTERNATIONAL CO NFERENCE ON MUNICH, GERMANY 12-16 SEPT. 1994, NEW YORK, NY, USA,IEEE, vol. 1, 12 September 1994 (1994-09-12), pages 119-126, XP010141832, DOI: 10.1109/IROS.1994.407401 ISBN: 978-0-7803-1933-2

## Description

### TECHNICAL FIELD

The present invention relates to a transfer system for setting a piece in a required orientation, according to the preamble of claim 1.

### PRIOR ART

Automated transfer systems are known that comprise a so-called singulator, i.e., a device that, starting from pieces heaped in bulk, forms an orderly flow of products that are then conveyed at a substantially constant pitch by a belt conveyor towards a subsequent machine or station, where operations of packaging and/or assembly and/or palleting are performed.

Automated transfer systems of a known type are scarcely satisfactory for pieces having a complex geometry in so far as the pieces set in a row on the belt conveyor have a random orientation in space that in general differs from one piece to the next. In other words, the pieces rest on the belt conveyor on any of their own faces, so that a manual intervention is necessary on the part of an operator in the station of arrival for setting the pieces in the required orientation.

Said diversity of orientation is found, for example, for pieces of toys or games made of plastic material that are to be inserted as surprises in packages of foodstuff products.

Furthermore, known transfer systems do not always manage to guarantee high rates of production, do not carry out quality control, and are particularly sensitive to processing waste and also to small variations of shape and dimensions in the pieces to be transferred. Said small variations, for example, can be due to the dimensional tolerances of previous moulding processes and/or to deformations of the plastic material, and are a cause of jamming and stoppages of the transfer systems and/or are a cause of rejects of the pieces.

In general, the singulator is defined by a vibration device or else by a mechanical device designed specifically for a particular shape of pieces. As the shape changes, the singulator must be replaced completely or must be modified substantially in its mechanical and electrical parts. Said adaptations entail a considerable expenditure in time and in general require a highly specialized labour force.

The patent No. EP1043642 corresponds to the preamble of Claim 1 and describes a robotized system having an image-processing function, for picking up one piece at a time from a container where the pieces are accumulated randomly in bulk. Said system comprises a robot having a wrist that carries a sensor, for example a photographic machine for capturing images of the pieces. A processor compares the captured image of a piece with a series of models stored for determining what should be the position and orientation of the robot so that the latter picks up the piece correctly.

### AIM OF THE INVENTION

The aim of the present invention is to provide a transfer system for setting a piece in a required orientation that will enable a simple and economically advantageous solution of the problems set forth above.

According to the present invention, a transfer system for setting a piece in a required orientation is provided as defined in Claim 1.

### BRIEF DESCRIPTION OF THE DRAWINGS

The invention will now be described with reference to the annexed drawings, which illustrate a non-limiting example of embodiment thereof, and in which:
- Figure 1 is a perspective view of a preferred embodiment of the transfer system for setting a piece in a required orientation according to the present invention;
- Figure 2 shows the system of Figure 1 from a different standpoint and with parts represented schematically;
- Figure 3 illustrates a particular of Figure 2 at an enlarged scale;
- Figure 4 illustrates, from above and at an enlarged scale, a further particular of the system of Figure 1;
- Figure 5 shows a variant of the particular of Figure 4;
- Figure 6 is a perspective view of a further preferred embodiment of the transfer system for setting a piece in a required orientation according to the present invention;
- Figure 7 is a different perspective view of the system of Figure 6, at an enlarged scale;
- Figure 8 illustrates a particular of Figure 7 with parts in exploded view and at an enlarged scale; and
- Figure 9 is a side view of another particular of Figure 7, at an enlarged scale.

### PREFERRED EMBODIMENTS OF THE INVENTION

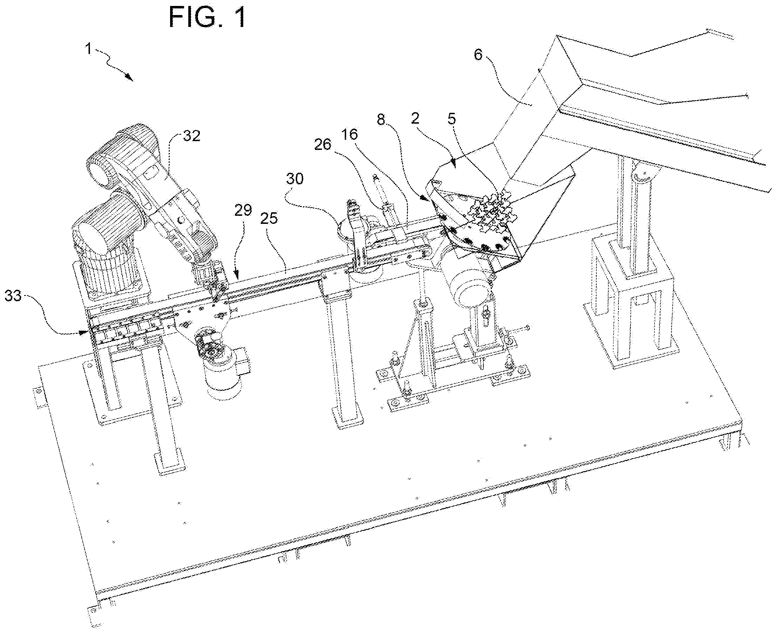

Designated by 1 in Figure 1 is a transfer system comprising a housing 2, open upwards and containing a heap of pieces 5 set in bulk. The pieces 5 are dropped into the housing 2, for example through a hopper 6, and are made to come out of the housing 2, still facing upwards, via a so-called singulator 8, i.e., a device that forms an orderly flow of pieces 5.

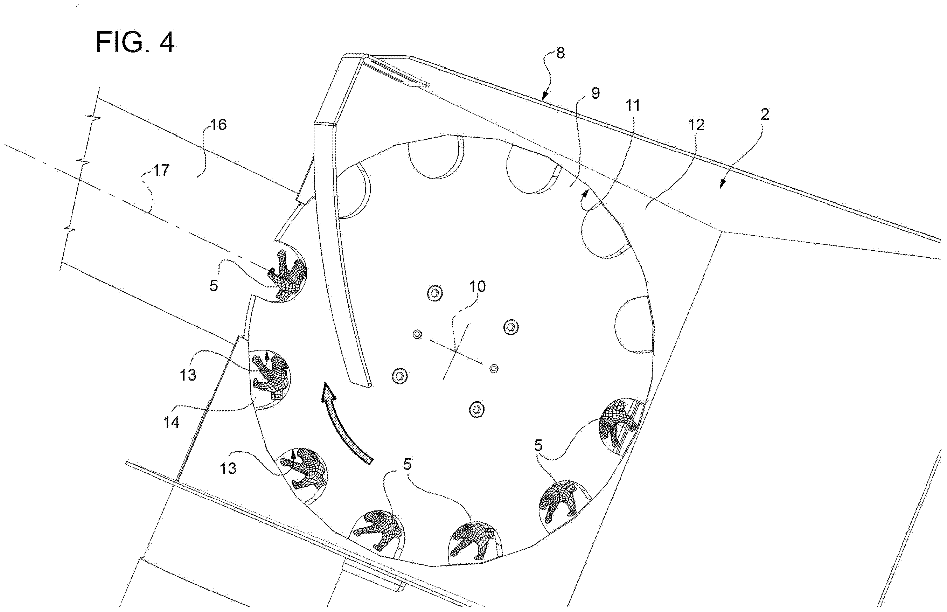

With reference to Figure 4, the singulator 8 comprises a hub (not visible) and a wheel 9, which is coaxially fixed on said hub along an axis 10. The hub is motor-driven for rotating axially, and the wheel 9 is housed in a circular seat 11 defined by a side 12 of the housing 2.

The side 12 and the wheel 9 define laterally a plurality of retention seats 13, which have dimensions and a shape such as to receive, each, a corresponding piece 5 during the passage in the heap of pieces 5 to the bottom of the housing 2. The seats 13 are closed at the rear by a wall 14, which is fixed with respect to the side 12 and is parallel to the wheel 9 and to the side 12. The wall 14, the wheel 9, and the side 12 are inclined with respect to the vertical so that the collected pieces 5 rest on the wall 14 and remain in the seats 13 during rotation towards the top dead centre. At top dead centre, the wall 14 has an opening, so that the pieces 5 drop from the respective seats 13 onto a conveyor 16, for example a belt conveyor, which is set underneath the wheel 9 and then conveys the pieces 5 in a row in a horizontal direction 17.

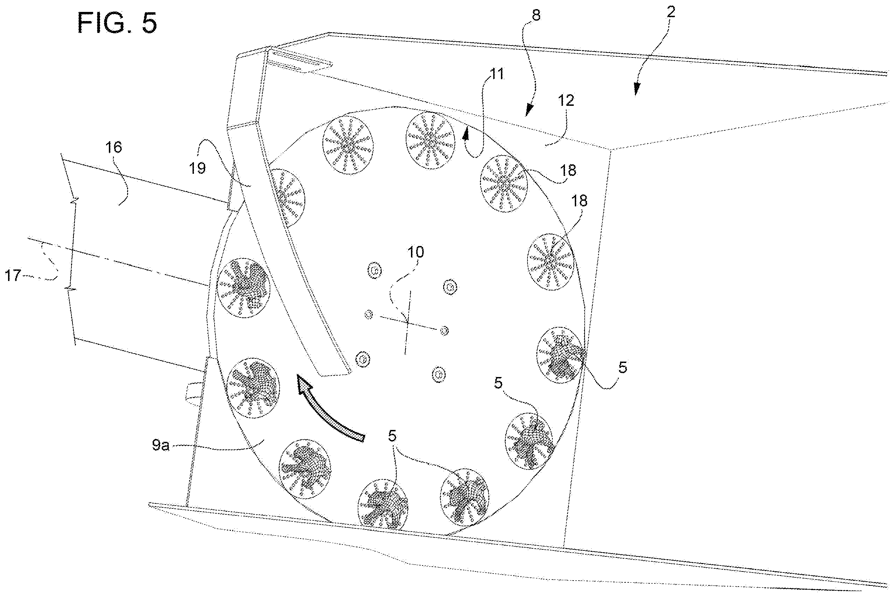

In the variant of Figure 5, the wheel 9 is replaced by a wheel 9a, which has, instead of the seats 13, a plurality of suction mouths 18 set along its own periphery. The suction mouths 18, behind the wheel 9a, are connected through respective tubes (not visible) to the motor-driven hub, which, in turn, communicates in a way not illustrated with a vacuum source. An elastic wall 19 is provided in a fixed position at the top end of the housing 2, immediately after the top dead centre of the wheel 9a, for detaching the pieces 5 and getting them to jump onto the conveyor 16 when the suction mouths 18 pass under the wall 19 during rotation. Preferably, the wheel 9a and the aforesaid tubes are interchangeable with the wheel 9 and the wall 14 so that is possible to use the seats 13 and the suction mouths 18 alternatively on one and the same singulator 8.

With reference to Figure 1, the system 1 further comprises a conveyor 25, parallel to and set alongside the conveyor 16, and a device 26 that transfers the pieces 5, one at a time from the conveyor 16 onto the conveyor 25.

The conveyor 25 is preferably of the belt type and defines a movable horizontal plane 29, on which the pieces 5 rest with a random spatial orientation, in general different from one piece to the next. The pitch between the pieces 5 depends upon the angular distance between the retention members of the wheels 9, 9a and is substantially constant, in the absence of rejects.

The system 1 further comprises a digital vision device 30, which is defined by a video camera or a photographic camera, is set above the plane 29, at a distance such as to have images in focus and capture at least one image for each of the pieces 5 that advance.

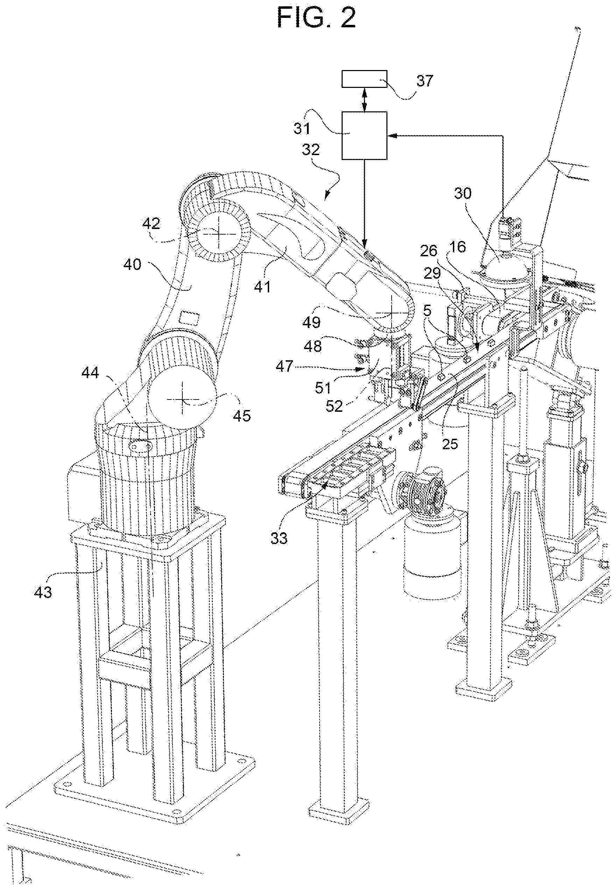

According to what is illustrated in Figure 2, the device 30 sends the data of the captured images to a control and command unit 31 (illustrated schematically), which controls a movement assembly 32 in a way synchronised with the speed of the conveyor 25. The assembly 32 grips one piece 5 at a time and places it in a station 33, defined for example by a temporary-deposit station, by an assembly station, or by a packaging station, where a pre-set spatial orientation is required. The assembly 32, under the command of the unit 31, turns each piece 5 about at least two mutually transverse axes during transfer from the plane 29 to the station 33 to obtain the required spatial orientation. In particular, the assembly 32 has characteristics such as to turn the pieces 5 about two mutually orthogonal axes, as will be described more fully in what follows.

The unit 31 is configured with algorithms that operate as a function of the data of the images captured by the device 30 and as a function of the outcome of a processing operation that compares the data of the captured images with the data of a set of images stored in a memory 37. The stored images represent at least one sample, which is similar to the piece 5 and is set in respective different stable resting positions, so that said images show the various orientations that are possible for the pieces 5 arriving on the plane 29. The processing performed by the unit 31 identifies, in the set of stored images, the one representing the sample with resting position closest to the one illustrated in the captured image, and, on the basis of the differences between the captured image, the identified image, and the final orientation to be obtained, the unit 31 automatically sets the optimal sequence and the angles of the rotations to be imparted to bring the piece 5 into the required spatial orientation.

Preferably, the unit 31 also sets the points of the piece 5 in which to carry out gripping, which is hence variable: on the basis of the geometry of the piece 5 and the orientation visible in the captured image, the algorithms enable the unit 31 to set automatically an ideal or optimal condition for gripping.

In the preferred embodiment illustrated in Figures 1 and 2, the assembly 32 is defined by an anthropomorphic robot, which comprises two arms 40, 41 hinged at one end about a horizontal axis 42. At the opposite end, the arm 40 is coupled to a base 43 so as to be able to rotate about a vertical axis 44 and about an axis 45 parallel to the axis 42, and the arm 41 is coupled to a gripper 47 via a wrist 48. In particular, the wrist 48 is coupled to the arm 41 so as to be able to rotate about an axis 49 parallel to the axis 42 and defines an articulated joint that enables the gripper 47 to rotate about an axis 52 orthogonal to the axis 49. The rotations about the axes 44, 45, 42, 49, 52 are performed by respective motors not described in detail, controlled by the unit 31. The unit 31 controls the motors correspondent to the axes 45, 42, 49 in order to keep the axis 52 vertical so that the gripper 47 takes and picks up the pieces 5 acting from above.

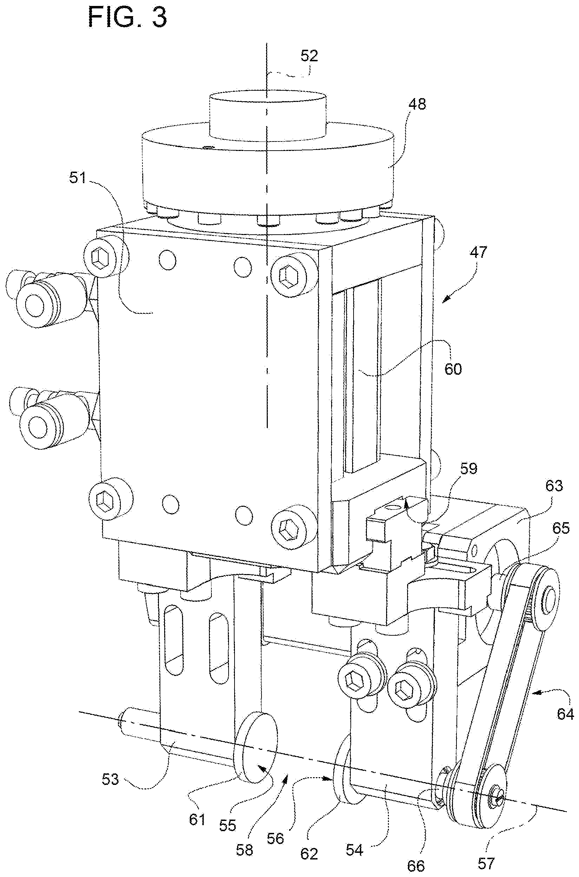

With reference to Figure 3, the gripper 47 comprises two fingers 53, 54, which carry respective surfaces 55, 56 coaxial along a longitudinal axis 57 orthogonal to the axis 52 and are coupled to the structure 51 so as to be able to approach/move away the surfaces 55, 56 longitudinally. In other words, the surfaces 55, 56 define an empty space 58 for housing a piece 5, with which they come into contact when they are brought up to one another. In particular, the fingers 53, 54 are coupled to a guide 59 of the structure 51 for translating parallel to the axis 57. The gripper 47 further comprises an actuator 60, in particular an electric actuator, which is coupled to the structure 51 and is controlled for displacing the fingers 53, 54 with respect to one another so as to grip/release the piece 5.

The surfaces 55, 56 are defined by respective disks 61, 62, which are rotatably coupled to the fingers 53, 54 about the axis 57. The disk 61 turns idle, whereas rotation of the disk 62 is driven by an actuator 63, fixed to the finger 54 and defined in particular by an electric motor. A belt transmission 64 transmits the rotation from an output shaft 65 of the actuator 63 to a pin 66, which is fixed and coaxial with respect to the surface 56, is parallel to the output shaft 65, and projects from the finger 54 towards the outside of the gripper 47, i.e. in a direction opposite to the space 58.

In use, after the piece 5 has been gripped between the surfaces 55, 56 in response to the operation of the actuator 60, the unit 31 controls the motors associated to the axes 44, 45, 42, 49 so as to pick up the piece 5 from the plane 29 and then transfer the piece 5 into the station 33. During transfer, the unit 31 controls the rotations about the axes 52 and 57 in response to the results of the comparisons of the captured and stored images so as to bring the piece 5 into the required final orientation. After reaching the station 33, the unit 31 issues a command to the actuator 60 to release the piece 5 and then brings the gripper 47 back above the conveyor 25 for gripping the next piece 5 and perform a new cycle.

According to a variant (not illustrated), the actuator 60 conveniently comprises two actuation stages set in series that can be actuated independently of one another. The first stage is driven by the unit 31 for adjusting the axial width of the space 58 between the surfaces 55, 56 and thus adapt the gripper 47 to different dimensions of the pieces to be gripped. This adaptation is made at the start of each lot of equal pieces to be transferred. The second stage is driven by the unit 31 so as to carry out the effective movement of gripping/release.

According to a further variant (not illustrated), the gripper 47 is equipped with an additional gripping member with vertical axis, for example a suction pad.

According to a further variant (not illustrated), the system 1 comprises a plurality of transfer lines, which are set alongside one another, transfer components different from one another, and each comprise a corresponding singulator 8, a corresponding conveyor 25, and a corresponding device 30. One or more robots are set at the end of said lines in a station where the various components arriving, respectively, on the transfer lines are assembled together or packaged.

According to a further variant (not illustrated), the pieces conveyed by the conveyor 25 under the device 30 are different from one another. The unit 31 is configured with appropriate algorithms so as to recognize the type of the various pieces, in addition to recognizing their spatial orientation on the plane 29, on the basis of the captured images and of the comparison with the stored images.

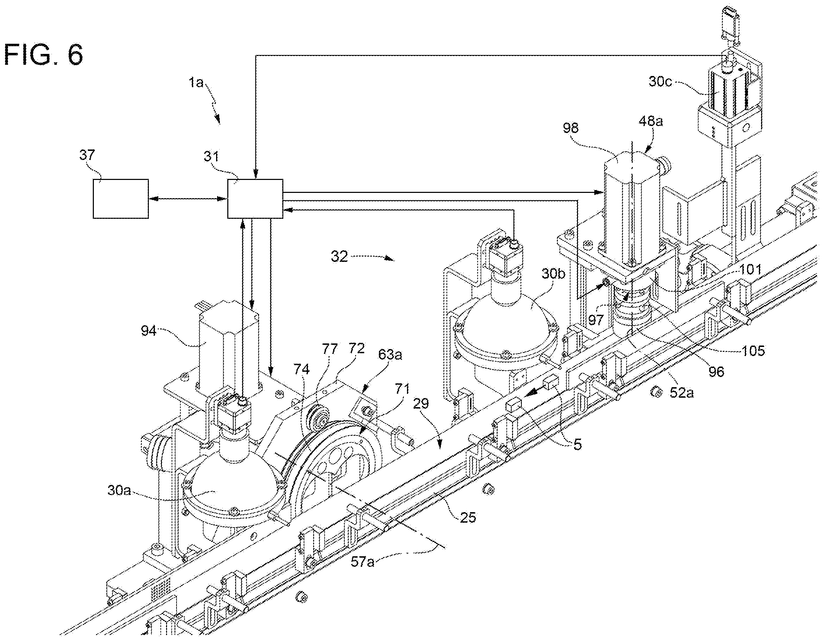

Figures 6 to 9 show a further embodiment of the system according to the present invention, designated by the reference number 1a. The parts that constitute the system 1a are identified, where possible, by the same reference numbers used for the system 1. In the system 1a, the assembly 32 comprises two distinct rotation devices, designated, respectively, by the reference numbers 63a and 48a, set along the path of the conveyor 25. The device 63a is configured so as to tip over each piece 5 about a horizontal axis 57a; the device 48a, on the other hand, is configured so as to rotate the piece 5 about a vertical axis 52a while the piece 5 is in contact with the plane 29.

The device 30 is replaced by two digital vision or image-capturing devices 30a, 30b (Figure 6), of the same type as the device 30. The device 30a is set along the path of the conveyor 25 upstream of the device 63a, considering the flow of the pieces 5; the device 30b, instead, is set between the devices 63a and 48a. Moreover, the system 1a comprises a further digital vision or image-capturing device 30c, which is set after the device 48a and is also connected to the unit 31, said unit being configured so as to compare the position/orientation of each piece 5 in the captured image by the device 30c with the final orientation to be obtained, to carry out a quality control. Possible pieces that have an orientation different from the one required are discarded in a way not illustrated, for example via a jet of air directed across the path of the conveyor 25, so as to blow said pieces towards a container or a recirculation system set alongside the conveyor 25.

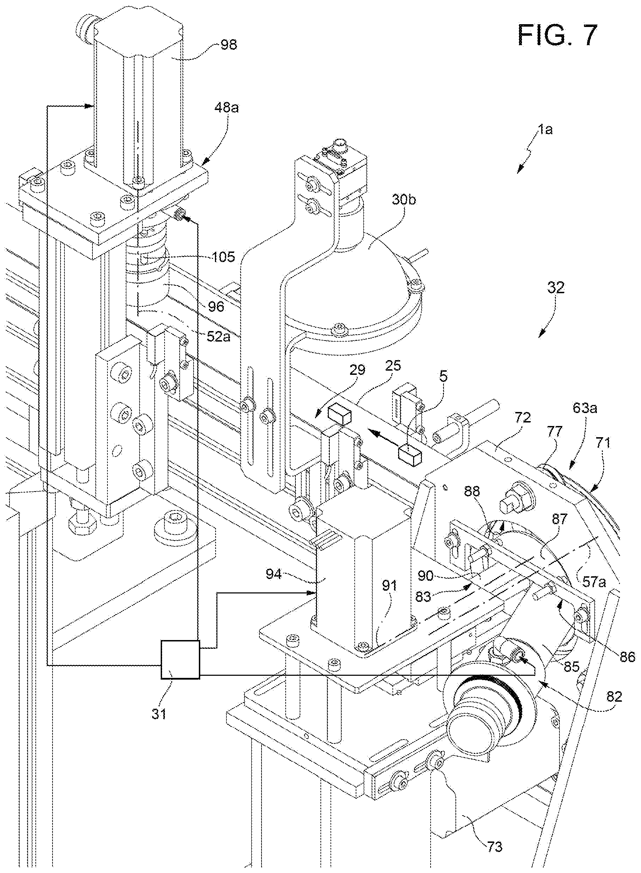

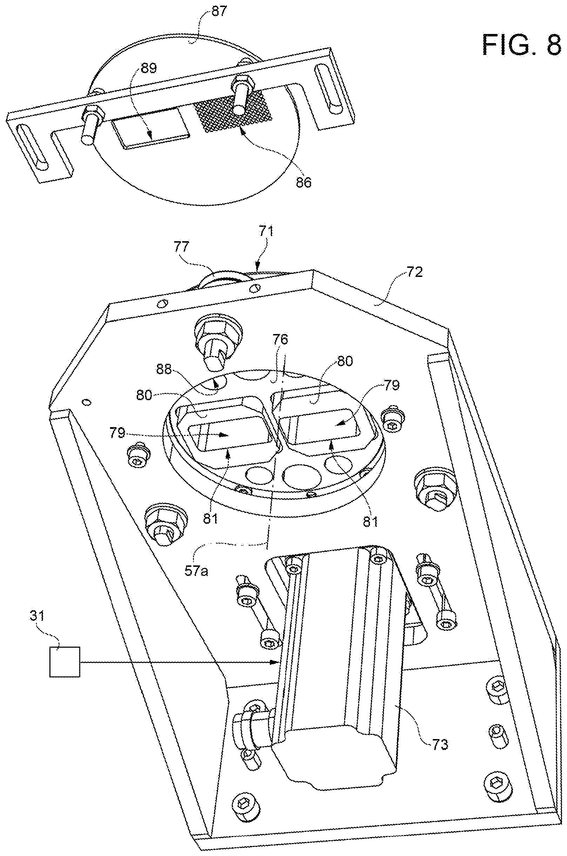

Also the device 63a is set alongside the conveyor 25 and comprises a tipping-over member 71, which is coupled to a structure 72 fixed so as to rotate about a horizontal axis under the action of a motor 73 (Figures 7 and 8). In particular, the motor 73 is set underneath the member 71 and is coupled to the latter via a transmission 74 (Figure 6), for example a belt transmission. The axis of rotation of the member 71 is orthogonal to the path of the conveyor 25, is set at the height of the flow of pieces 5 on the plane 29, and coincides with the axis 57a about which the pieces 5 are tipped over through 180°.

In particular, with reference to Figure 8, the member 71 comprises a disk 76 having a circular outer edge coupled by rolling to three rollers 77, which are mounted on the structure 72 in positions at angular distances apart from one another. The member 71 has two compartments 79, which are diametrally opposite with respect to the axis 57a and have the same shape and dimensions, sufficient for each to house a corresponding piece 5. The compartments 79 are open at the front, i.e., towards the conveyor 25, to enable input and output of the respective pieces 5, and have respective rear openings 81, i.e., on the opposite side with respect to the conveyor 25.

Preferably, the compartments 79 are defined by respective inserts 80, which are fixed to the disk 76, can be replaced with other inserts having compartments of a different shape and/or dimensions, and in particular project at the rear from the disk 76.

The motor 73 is controlled by the unit 31 so as to set the compartments 79 selectively in a first position and a second position, in which the compartments 79 are aligned with respect to one another horizontally, i.e., in a direction parallel to the path of the conveyor 25.

As illustrated in Figure 7, the openings 81 of the compartments 79 are aligned with a suction device 82 and, respectively, with a thrust device 83. The device 82 defines a pick-up system that displaces the pieces 5 from the plane 29 into the member 71. The device 82, for example, comprises a valve controlled by the unit 31 so as to control the flow of air in a duct 85, which sets a vacuum source in communication with an inlet mouth 86 located at the first position of the compartments 79.

With reference to Figure 8, the inlet mouth 86 is defined by a perforated portion of a plate 87, which is set in a fixed position behind the member 71, is orthogonal to the axis 57a, is housed in an opening 88 of the structure 72, and has a hole 89 corresponding to the second position of the compartments 79. In this way, on one hand, the perforated portion of the plate 87 defines a stop surface for the piece 5 that is sucked into the member 71 and, on the other hand, the hole 89 enables the device 83 to enter the compartment 79 and expel the piece 5 from the member 71 after it has been tipped over through 180°.

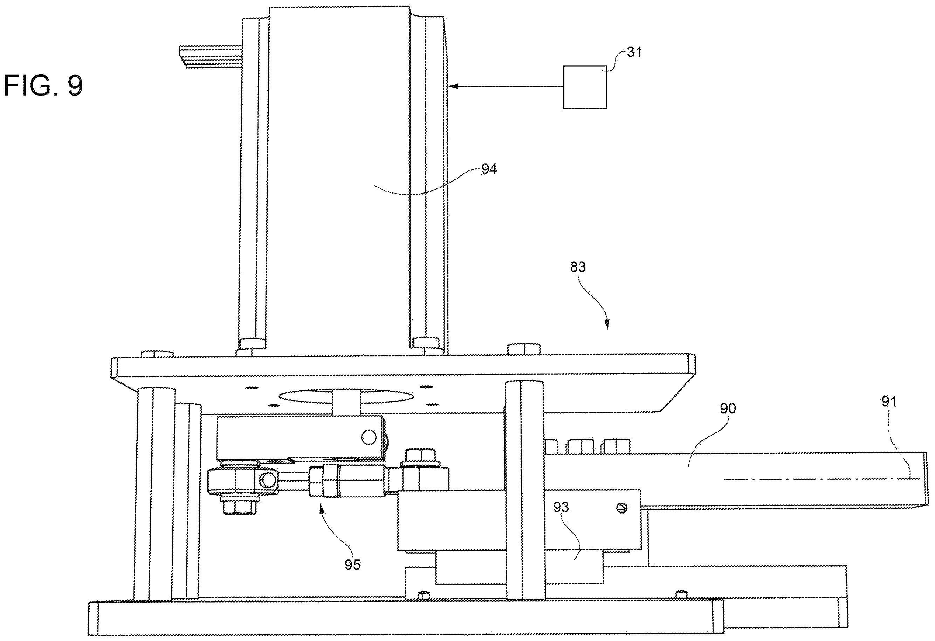

With reference to Figure 9, the device 83 comprises a slide 90, which is aligned with the hole 89 and with the second position of the compartments 79 in a direction 91 parallel to the axis 57a, is coupled to a guide 93 for translating along the direction 91, and is driven by a motor 94 controlled by the unit 31.

Preferably, a crankshaft transmission 95 transmits motion from the motor 94 to the slide 90. In this way, the accelerations of the slide 90 in the proximity of the points of start and end of travel (top dead centre and bottom dead centre of the transmission 95) are relatively low so that the piece 5 is accompanied gently by the tip of the slide 90 while it is being pushed onto the plane 29.

In use, substantially as for the system 1 described above, according to the image captured by the device 30a, for each piece 5 the unit 31 establishes whether it is necessary to tip the piece 5 over through 180° about the axis 57a and, if so, issues a command to the device 82 to displace the piece 5 from the plane 29 into the device 63a. Obviously, the instant of activation of the device 82 depends upon the speed of the conveyor 25 and/or upon the detected position of the piece 5. Advantageously, the unit 31 issues a command to the device 82 so that it will vary the instant at which suction starts also as a function of the position and/or orientation of the piece 5 in the image captured by the device 30a. In this way, if necessary, it is possible to impart on the piece 5 already a small rotation during its movement towards the inlet mouth 86 (Figure 7), after which the unit 31 issues a command to the device 63a to tip the piece 5 over through 180°.

Preferably, the device 83 is controlled by the unit 31 together with the device 82 so as to carry out simultaneously picking-up of a piece 5 that must be tipped over and expulsion of another piece 5 that must be sent back onto the conveyor 25. In this way, the picked-up piece 5 is replaced with another having an orientation closer to, or the same as, the required one, and the row of pieces 5 remains substantially unaltered.

According to what is illustrated in Figure 6, according to the image captured by the device 30b, for each piece 5 the unit 31 establishes whether there is necessary a rotation about the axis 52a and, if so, issues a command to the device 48a. The latter comprises: a head or buffer 96, set above the plane 29; a linear actuator 97, preferably a pneumatic actuator, controlled by the unit 31 for translating the head 96 along the axis 52a; and a motor 98 controlled by the unit 31 for rotating the head 96 about the axis 52a after the head 96 has been lowered by the actuator 97 and has come into contact with an underlying piece 5. As a result of the friction between the bottom surface of the head 96 and the piece 5, the latter turns through the angle set by the head 96 itself sliding on the plane 29. After rotation, the actuator 97 is controlled to lift the head 96 up again so that the conveyor 25 continues to transfer the piece 5 towards the device 30c.

Preferably, the actuator 97 is set between the motor 98 and the head 96 and comprises a sleeve (not visible in Figure 6), which is coaxial and fixed with respect to the rotary shaft of the motor 98. Said sleeve is housed in a casing 101, which is angularly fixed and defines at least part of a pneumatic distributor. The device 48a further comprises at least one stem 105, which is parallel and eccentric with respect to the axis 52a and guides axial translation of the head 96, constraining it angularly with respect to the sleeve of the actuator 97.

From the foregoing it emerges clearly that the systems 1, 1a not only transfer the pieces 5, but orient them automatically in the required way. The system 1 does not need structural modifications to be able to transfer pieces having a different shape and/or different dimensions. In fact, automatic orientation of the pieces is obtained by a unit 31 that receives the data of the captured images and compares them automatically with the data stored corresponding to various possible orientations and to the required final orientation. When a lot of pieces with a different shape and/or different dimensions must be transferred, it is necessary to store the images of the various possible orientations of the new type of pieces, and a new setting of operating parameters in the algorithms of the unit 31 could be necessary, without any need for adjustment or replacement of mechanical parts. Programming of the unit 31 can be performed also remotely, for example via the Internet.

The system 1a could require structural modifications (for example, a replacement of the inserts 80), but said modifications are extremely small as compared to those of assemblies for transfer of pieces in a row according to the known art. On the other hand, the system 1a enables positioning of the pieces 5 in the required orientation with negligible margins of error and reduced numbers of rejects, and enables a high production rate to be achieved. The images captured by the device 30 are used by the unit 31 in a known way to identify the co-ordinates of the position of each piece on the plane 29 so as to set the gripper 47 in the correct horizontal position during picking up, and can be exploited to carry out a quality control on the pieces 5 transferred.

The systems 1, 1a described can be used in sectors extremely different from one another and for different purposes, in which it is necessary to orient components randomly resting on a plane.

Also the singulator 8 is suited to conveying pieces of different shape and dimensions, provided that said dimensions fall within a maximum size range, thanks to the use of the seats 13 or of the suction mouths 18, without having to make modifications to the mechanical parts.

The characteristics of the gripper 47 and of the robot make it possible to prevent any sliding on the plane 29, to carry out just two rotations for setting each piece 5 in any required final orientation, and to carry out said rotations simultaneously, precisely during transfer of the piece 5 from the plane 29 to the station 33, hence saving time and encumbrance and preventing any friction.

In addition to obtaining fast transfer, the gripper 47 and the robot enable precision to be obtained for the position and for the orientation of the pieces 5 left in the station 33.

Finally, from the foregoing it emerges clearly that modifications and variations may be made to the systems 1, 1a described with reference to the attached figures, without thereby departing from the scope of protection of the present invention, as defined in the annexed claims.

In particular, the fingers 53, 54 could present a motion of a rotary type with respect to the structure 51; and/or one of the fingers 53, 54 could be fixed with respect to the structure 51; and/or the surfaces 55, 56 could be defined by resting elements with a shape different from that of the disks 61, 62; and/or at least one of the disks 61, 62 could be provided with axial translation with respect to the corresponding finger 53, 54 (possibly with the fingers 53, 54 fixed with respect to the structure 51); and/or the motor 62 could be set in different positions, for example along the axis 57 without the transmission 64.

The movement assembly 32 could be defined by a robot of a type different from an anthropomorphic one, or else, instead of the robot, could comprise different equipment. For instance, the assembly 32 could comprise a table, which is rotary about a vertical axis and is provided with a gripper that picks up one piece at a time from the conveyor 25 and, via rotation of the table, transfers it into a different station, in which the piece is rotated, respectively, about different axes. Moreover, the pieces 5 could be brought into the required final orientation via a different sequence of rotations, for example via rotations about three transverse axes, lying in a horizontal plane.

In addition, the singulator 8 could be of a different type, for example of a traditional vibration type; and/or the device 30 could be set in another position: for example, it could be set alongside the conveyor 25 or else it could be carried directly by the gripper 47; or else the device 30 could be aimed on the plane 29, with a viewing direction inclined with respect to the vertical.

Furthermore, the pieces 5 could be randomly heaped in bulk on a relatively wide conveyor, instead of being conveyed in a row formed by the singulator 8; or else the device 30 could capture the images of the pieces 5 while the latter are stationary on the plane 29, instead of capturing them while they are moving.

The device 82 could be replaced by a thrust device; or else tipping-over about the axis 57a could be performed by causing the pieces 5 to roll on the plane 29, instead of pushing them away with the device 82 and bringing them back onto the plane 29 via the device 83.

Finally, the singulator 8 could be used for traditional transfer lines, without the device 30, the unit 31, or the assembly 32.

## Claims

1. A transfer system for setting a piece in a required orientation, the system comprising:
- a vision device (30; 30a, 30b) for capturing at least one image of said piece (5);
- control and command means (31) comprising:
a) storage means (37) containing data of stored images representing at least one sample element, which is the same as said piece (5) and is set in respective different stable resting positions; and
b) processing means for comparing data of the captured image with the data of the stored images; the system further comprising movement means (32) comprising first rotation means (63; 63a) for rotating said piece (5) about a first axis (57; 57a) and second rotation means (48; 48a) for rotating said piece (5) about a second axis (52; 52a) transverse to said first axis (57; 57a);
**characterized in that**:
- the system further comprises a conveyor (25) having a movable horizontal plane (29) for transferring a flow of said pieces;
- the control and command means (31) are configured to control said movement means (32) so as to set said piece (5) in the required orientation, as a function of differences between the position of the piece in the captured image and the required orientation, by controlling the rotations about said first and second axes, during a transfer of said piece, in response to the results of the comparisons of the captured and stored images;
- said vision device is aimed on said movable horizontal plane (29), so that said movable horizontal plane (29) defines a resting plane where the pieces (5) are placed on, when the respective images are captured by said vision device.

2. The system according to Claim 1, wherein said first rotation means and second rotation means are defined respectively by a first rotation device (63a) and by a second rotation device (48a), which are distinct and set along the path of the conveyor (25).

3. The system according to claim 2, wherein the first rotation device (63a) is configured so as to tip over each piece (5) about a horizontal axis (57a).

4. The system according to claim 2 or 3, wherein the second rotation device (48a) is configured so as to rotate each piece (5) about a vertical axis (52a) while the piece (5) is in contact with the movable horizontal plane (29).

5. The system according to claim 3, wherein the first rotation device (63a) is set alongside the conveyor (25) and comprises a tipping-over member (71), which is coupled to a fixed structure (72) so as to rotate about a horizontal axis under the action of a motor (73).

6. The system according to claim 5, wherein said horizontal axis is orthogonal to the path of the conveyor (25), is set at the height of the flow of pieces (5) on the movable horizontal plane (29), and coincides with the first axis (57a), about which the pieces (5) are tipped over through 180°.

7. The system according to Claim 1, **characterized in that** said vision device (30; 30a, 30b) is set in a fixed position.

8. The system according to Claim 1 or Claim 7, **characterized in that** said first and second axes (57, 52; 57a, 52a) are orthogonal.

9. The system according to Claim 8, **characterized in that** said movement means (32) comprise moving-away means (47; 82) for displacing said piece away from said movable horizontal plane (29); said first rotation means (63; 63a) being controlled so as to rotate said piece about said first axis (57; 57a) after said piece has been moved away from said movable horizontal plane (29).

10. The system according to Claim 9, **characterized in that** said first rotation means (63) are supported by a gripper (47) of a robot defining said moving-away means.

11. The system according to Claim 9, **characterized in that** said first rotation means (63a) are set alongside said conveyor (25) and comprises a tipping-over member (71) rotatable about a horizontal axis to tip over a piece (5) about said first axis (57a); said moving-away means (82) comprising a suction device that displaces the piece (5) from said movable horizontal plane (29) into said tipping-over member (71).

12. The system according to Claim 11, **characterized in that** said tipping-over member (71) has two compartments (79), which are diametrically opposite with respect to said horizontal axis and are open towards said conveyor (25) to enable input and output of respective pieces (5).

13. The system according to Claim 12, **characterised by** comprising a thrust device (83) configured to enter one of said compartments (79) and expel the piece (5) from said tipping-over member (71) after it has been tipped over through 180°.

14. The system according to Claim 13, **characterized in that** said control and command means (31) control said thrust device (83) together with said suction device (82) so as to carry out simultaneously the picking-up of a piece (5), that must be tipped over, and the expulsion of another piece (5).

15. The system according to anyone of Claims 11 to 14, **characterized in that** said control and command means (31) control said suction device (82) so as to change the instant at which the suction of said piece (5) starts as a function of the position and/or orientation of the piece in the captured image.

16. The system according to any one of the preceding claims, **characterized by** further comprising:
- a housing (2) for containing a heap of pieces in bulk; and
- a singulator (8) for forming an orderly flow of pieces from said heap; wherein said conveyor (16, 26, 25) is located between said singulator (8) and said vision device (30);
said singulator (8) comprising a motor-driven wheel (9;9a), which has, along its own periphery, a plurality of retention members for collecting and conveying respective said pieces; said retention members being defined by retention seats (13) or else by suction mouths (18).

## Patentansprüche

1. Transfersystem zur Einstellung eines Teils in einer erforderlichen Ausrichtung, wobei das System aufweist:
- eine Sichtvorrichtung (30; 30a, 30b) zum Aufnehmen von zumindest einem Bild des Teils (5);
- Steuerungs- und Befehlseinrichtungen (31), aufweisend:
a) eine Speichereinrichtung (37), die Daten gespeicherter Bilder enthält, die zumindest ein Probenelement darstellen, welches das gleiche wie das Teil (5) ist und in jeweiligen, unterschiedlichen stabilen Ruhepositionen eingestellt ist; und
b) Verarbeitungseinrichtungen zum Vergleichen von Daten des aufgenommenen Bilds mit den Daten der gespeicherten Bilder;
wobei das System ferner Bewegungseinrichtungen (32), die erste Dreheinrichtungen (63; 63a) zum Drehen des Teils (5) um eine erste Achse (57; 57a) sowie zweite Dreheinrichtungen (48; 48a) zum Drehen des Teils (5) um eine zweite, zur ersten Achse (57; 57a) querverlaufende Achse (52; 52a) aufweist;
**dadurch gekennzeichnet, dass**:
- das System ferner ein Förderband (25) mit einer bewegbaren Horizontalebene (29) für den Transfer eines Flusses der Teile aufweist;
- die Steuerungs- und Befehlseinrichtungen (31) eingerichtet sind, die Bewegungseinrichtungen (32) dahingehend zu steuern, das Teil (5) in der erforderlichen Ausrichtung einzustellen, in Abhängigkeit von Differenzen zwischen der Position des Teils in dem aufgenommenen Bild und der erforderlichen Ausrichtung durch Steuern der Drehungen um die erste und zweite Achse während eines Transfers des Teils als Reaktion auf die Ergebnisse der Vergleiche der aufgenommenen und gespeicherten Bilder;
- die Sichtvorrichtung auf die bewegbare Horizontalebene (29) gerichtet ist, so dass die bewegbare Horizontalebene (29) eine Auflageebene definiert, auf der die Teile (5) platziert werden, wenn die jeweiligen Bilder von der Sichtvorrichtung aufgenommen werden.

2. System nach Anspruch 1, wobei die ersten Dreheinrichtungen und die zweiten Dreheinrichtungen durch eine erste Drehvorrichtung (63a) bzw. eine zweite Drehvorrichtung (48a) definiert sind, die eigenständig und entlang des Weges der Fördereinrichtung (25) eingestellt sind.

3. System nach Anspruch 2, wobei die erste Drehvorrichtung (63a) eingerichtet ist, jedes Teil (5) um eine horizontale Achse (57a) zu kippen.

4. System nach Anspruch 2 oder 3, wobei die zweite Drehvorrichtung (48a) eingerichtet ist, jedes Teil (5) um eine vertikale Achse (52a) zu drehen, während das Teil (5) in Kontakt mit der bewegbaren Horizontalebene (29) ist.

5. System nach Anspruch 3, wobei die erste Drehvorrichtung (63a) entlang der Fördereinrichtung (25) eingestellt ist und ein Umkipp-Element (71) aufweist, das derart an eine feste Struktur (72) gekoppelt ist, dass es sich unter Einwirkung eines Motors (73) um eine horizontale Achse dreht.

6. System nach Anspruch 5, wobei die horizontale Achse orthogonal zum Pfad der Fördereinrichtung (25) ist, auf Höhe des Flusses von Teilen (5) auf der bewegbaren Horizontalebene (29) eingestellt ist, und mit der ersten Achse (57a), um die die Teile um 180° umgekippt werden, zusammenfällt.

7. System nach Anspruch 1, **dadurch gekennzeichnet, dass** die Sichtvorrichtung (30, 30a, 30b) in einer festen Position eingestellt ist.

8. System nach Anspruch 1 oder Anspruch 7, **dadurch gekennzeichnet, dass** die ersten und zweiten Achsen (57; 52; 57a, 52a) orthogonal sind.

9. System nach Anspruch 8, **dadurch gekennzeichnet, dass** die Bewegungseinrichtungen (32) Wegbewegungs-Einrichtungen (47; 82) aufweisen, um das Teil von der bewegbaren Horizontalebene (29) weg zu verlagern; wobei die ersten Dreheinrichtungen (63; 63a) derart gesteuert werden, dass sie das Teil um die erste Achse (57; 57a) drehen, nachdem das Teil von der bewegbaren Horizontalebene (29) weg bewegt wurde.

10. System nach Anspruch 9, **dadurch gekennzeichnet, dass** die ersten Dreheinrichtungen (63) von einem Greifer (47) eines Roboters gelagert werden, der die Wegbewegungs-Einrichtungen definiert.

11. System nach Anspruch 9, **dadurch gekennzeichnet, dass** die ersten Dreheinrichtungen (63a) entlang der Fördereinrichtung (25) eingestellt sind und ein Umkipp-Element (71) aufweisen, das um eine Horizontalachse drehbar ist, um ein Teil (5) um diese erste Achse (57a) zu kippen; wobei die Wegbewegungs-Einrichtungen (82) eine Saugvorrichtung aufweisen, die das Teil (5) von der bewegbaren Horizontalebene (29) in das Umkippelement-Element (71) verlagert.

12. System nach Anspruch 11, **dadurch gekennzeichnet, dass** das Umkipp-Element (71) zwei Kompartimente (79) besitzt, die in Bezug auf die Horizontalachse diametral gegenüberliegend sind und in Richtung der Fördereinrichtung (25) offen sind, um das Einsetzen und Entnehmen jeweiliger Teile (5) zu ermöglichen.

13. System nach Anspruch 12, **dadurch gekennzeichnet, dass** es eine Schubvorrichtung (83) aufweist, die eingerichtet ist, in eines der Kompartimente (79) einzudringen und das Teil (5) aus dem Umkipp-Element (71) zu verdrängen, nachdem es um 180° gekippt wurde.

14. System nach Anspruch 13, **dadurch gekennzeichnet, dass** die Steuerungs- und Befehlseinrichtungen (31) die Schubvorrichtung (83) zusammen mit der Saugvorrichtung (82) dahingehend steuert, das Aufnehmen eines Teils (5), das umgekippt werden muss, sowie das Verdrängen eines anderen Teils (5) gleichzeitig auszuführen.

15. System nach einem der Ansprüche 11 bis 14, **dadurch gekennzeichnet, dass** die Steuerungs- und Befehlseinrichtungen (31) die Saugvorrichtung (82) dahingehend steuert, den Moment, an dem das Ansaugen des Teils (5) beginnt, in Abhängigkeit von der Position und/oder Ausrichtung des Teils in dem aufgenommenen Bild zu ändern.

16. System nach einem der vorstehenden Ansprüche, **dadurch gekennzeichnet, dass** es ferner aufweist:
- ein Gehäuse (2) zum Aufnehmen eines losen Teilehaufens; und
- eine Vereinzelungseinrichtung (8), die aus dem Haufen einen geordneten Fluss von Teilen bildet;
wobei sich die Fördereinrichtung (16, 26, 25) zwischen der Vereinzelungseinrichtung (8) und der Sichtvorrichtung (30) befindet;
wobei die Vereinzelungseinrichtung (8) ein motorgetriebenes Rad (9; 9a) aufweist, das entlang seines eigenen Umfangs eine Vielzahl von Halteelementen zum Aufsammeln und Fördern von jeweiligen Teilen aufweist;
wobei die Halteelemente durch Haltesitze (13) oder durch Ansaugmündungen (18) definiert sind.

## Revendications

1. Système de transfert pour disposer une pièce dans une orientation requise, le système comprenant :
- un dispositif de vision (30 ; 30a, 30b) pour capturer au moins une image de ladite pièce (5) ;
- des moyens de contrôle et de commande (31) comprenant :
a) des moyens de stockage (37) contenant des données d'images stockées représentant au moins un élément d'échantillon, qui est le même que ladite pièce (5) et est disposé dans différentes positions de repos stables respectives ; et
b) des moyens de traitement pour comparer les données de l'image capturée avec les données des images stockées ;
le système comprenant en outre :
des moyens de déplacement (32) comprenant des premiers moyens de rotation (63 ; 63a) pour faire tourner ladite pièce (5) autour d'un premier axe (57 ; 57a) et des seconds moyens de rotation (48 ; 48a) pour faire tourner ladite pièce (5) autour d'un second axe (52 ; 52a) transversal par rapport audit premier axe (57 ; 57a) ;
**caractérisé en ce que** :
- le système comprend en outre un transporteur (25) ayant un plan horizontal mobile (29) pour transférer un flux desdites pièces ;
- les moyens de contrôle et de commande (31) sont configurés pour contrôler lesdits moyens de déplacement (32) afin de disposer ladite pièce (5) dans l'orientation requise, en fonction des différences entre la position de la pièce dans l'image capturée et l'orientation requise, en contrôlant les rotations autour desdits premier et second axes, pendant un transfert de ladite pièce, en réponse aux résultats des comparaisons des images capturée et stockées ;
- ledit dispositif de vision est pointé sur ledit plan horizontal mobile (29), de sorte que ledit plan horizontal mobile (29) définit un plan de repos où les pièces (5) sont placées, lorsque les images respectives sont capturées par ledit dispositif de vision.

2. Système selon la revendication 1, dans lequel lesdits premiers moyens de rotation et seconds moyens de rotation sont définis respectivement par un premier dispositif de rotation (63a) et par un second dispositif de rotation (48a), qui sont distincts et disposés le long de la trajectoire du transporteur (25).

3. Système selon la revendication 2, dans lequel le premier dispositif de rotation (63a) est configuré pour faire basculer chaque pièce (5) autour d'un axe horizontal (57a).

4. Système selon la revendication 2 ou 3, dans lequel le second dispositif de rotation (48a) est configuré pour faire tourner chaque pièce (5) autour d'un axe vertical (52a) alors que la pièce (5) est en contact avec le plan horizontal mobile (29).

5. Système selon la revendication 3, dans lequel le premier dispositif de rotation (63a) est placé le long du transporteur (25) et comprend un élément de basculement (71), qui est couplé à une structure fixe (72) afin de tourner autour d'un axe horizontal sous l'action d'un moteur (73).

6. Système selon la revendication 5, dans lequel ledit axe horizontal est orthogonal à la trajectoire du transporteur (25), est disposé à la hauteur du flux de pièces (5) sur le plan horizontal mobile (29) et coïncide avec le premier axe (57a), autour duquel les pièces (5) sont basculées à 180°.

7. Système selon la revendication 1, **caractérisé en ce que** ledit dispositif de vision (30 ; 30a, 30b) est disposé dans une position fixe.

8. Système selon la revendication 1 ou la revendication 7, **caractérisé en ce que** lesdits premier et second axes (57, 52 ; 57a, 52a) sont orthogonaux.

9. Système selon la revendication 8, **caractérisé en ce que** lesdits moyens de déplacement (32) comprennent des moyens d'éloignement (47 ; 82) pour déplacer ladite pièce à distance dudit plan horizontal mobile (29) ; lesdits premiers moyens de rotation (63 ; 63a) étant contrôlés afin de faire tourner ladite pièce autour dudit premier axe (57 ; 57a) après que ladite pièce a été éloignée dudit plan horizontal mobile (29).

10. Système selon la revendication 9, **caractérisé en ce que** lesdits premiers moyens de rotation (63) sont supportés par un dispositif de préhension (47) d'un robot définissant lesdits moyens d'éloignement.

11. Système selon la revendication 9, **caractérisé en ce que** lesdits premiers moyens de rotation (63a) sont disposés le long dudit transporteur (25) et comprennent un élément de basculement (71) pouvant tourner autour d'un axe horizontal pour faire basculer une pièce (5) autour dudit premier axe (57a) ; lesdits moyens d'éloignement (82) comprenant un dispositif d'aspiration afin de déplacer la pièce (5) dudit plan horizontal mobile (29) dans ledit élément de basculement (71).

12. Système selon la revendication 11, **caractérisé en ce que** ledit élément de basculement (71) a deux compartiments (79), qui sont diamétralement opposés par rapport audit axe horizontal et sont ouverts vers ledit transporteur (25) pour permettre l'entrée et la sortie des pièces (5) respectives.

13. Système selon la revendication 12, **caractérisé en ce qu'**il comprend un dispositif de poussée (83) configuré pour entrer dans l'un desdits compartiments (79) et expulser la pièce (5) dudit élément de basculement (71) après qu'elle a été basculée à 180°.

14. Système selon la revendication 13, **caractérisé en ce que** lesdits moyens de contrôle et de commande (31) contrôlent ledit dispositif de poussée (83) conjointement avec ledit dispositif d'aspiration (82) afin de réaliser simultanément le prélèvement d'une pièce (5) qui doit être basculée, et l'expulsion d'une autre pièce (5).

15. Système selon l'une quelconque des revendications 11 à 14, **caractérisé en ce que** lesdits moyens de contrôle et de commande (31) contrôlent ledit dispositif d'aspiration (82) afin de modifier le moment auquel l'aspiration de ladite pièce (5) commence en fonction de la position et de l'orientation de la pièce sur l'image capturée.

16. Système selon l'une quelconque des revendications précédentes, **caractérisé en ce qu'**il comprend en outre :
- un logement (2) pour contenir un tas de pièces en vrac ; et
- un séparateur (8) pour former un flux de pièces ordonné à partir dudit tas ; où ledit transporteur (16, 26, 25) est positionné entre ledit séparateur (8) et ledit dispositif de vision (30) ; ledit séparateur (8) comprenant une roue motorisée (9 ; 9a) qui a, le long de sa propre périphérie, une pluralité d'éléments de retenue pour collecter et transporter lesdites pièces respectives ; lesdits éléments de retenue étant définis par des sièges de retenue (13) ou bien par des bouches d'aspiration (18).
